# EUROPEAN PATENT SPECIFICATION

(11) **EP 0 357 419 B1**
(45) Date of publication and mention of the grant of the patent: **13.04.1994**
(21) Application number: 89308810.4
(22) Date of filing: 31.08.1989
(51) Int. Cl.: G11B 7/00

(54) **Optical data recording and readout apparatus**
Optisches Datenaufzeichnungs- und -wiedergabegerät
Appareil pour l'enregistrement et la reproduction de données

(30) Priority: 02.09.1988 US 239863
(43) Date of publication of application: 07.03.1990
(73) Proprietor: International Business Machines Corporation, Armonk, N.Y. 10504 (US)
(72) Inventor: Kulakowski, John Edward, Tucson Arizona 85715 (US); Means, Rodney Jerome, Tucson Arizona 85715 (US); Oldham, David Mitchell, Tucson Arizona 85715 (US); Tayefeh, Morovat, Tucson Arizona 85749 (US)
(74) Representative: Burt, Roger James, Dr.

(56) References cited:
- EP-A- 0 077 642
- GB-A- 2 016 744
- US-A- 4 308 612
- US-A- 4 648 085
- PATENT ABSTRACTS OF JAPAN, vol. 9, no. 6 (P-326)[1729], 11th January 1985;& JP-A-59 154 651
- PATENT ABSTRACTS OF JAPAN, vol. 10, no. 135 (P-457)[2192], 20th May 1986;& JP-A-60 256 945

## Description

The present invention relates to apparatus for optically recording information-bearing signals and reading out recorded signals.

Several recording technologies have been used over the past years for recording data or other forms of information-bearing signals onto optical record members, such as rotatable disks.

Ablative recording has been used for the so-called write once/read many (WORM) recording systems. The information recorded on the record member is optically sensed by shining a light beam onto the recorded area and sensing the intensity modulation in the reflected light. For ablative systems, the space on the record member between ablated areas provides for high reflection of light while the ablated areas reflect very little, if any, light into the sensing mechanism. The record member intensity modulates a reflected readout beam for enabling faithful recovery of the recorded information.

In a similar manner, so-called phase-change materials record information by changing the phase of the medium of the record member between crystalline and amorphous states. The surface reflectivities of the portion of the medium in the two states are different for the readout light beam. Bipolymer systems can also be used, which reflect or transmit light of varying colours with varying intensities.

Yet another system for optical recording uses magneto-optic technology. During the recording process, a magnetic steering field envelops the area of the record medium to be recorded. A light beam from a laser shines onto the recording area for heating above its Curie point temperature a spot on the magneto-optic coating in which recording is to take place. Upon cooling, the heated spot magnetically follows the magnetic steering field for recording the information represented by the modulated recording beam from the laser. For readout or tracking through the recording area, the laser light beam has a reduced intensity such that the medium in the recording area is not heated above its Curie point. Generally, such magneto-optic (hereinafter MO) record members require erasure to a reference state before each recording operation, such as to a binary zero state (a so-called south pole being adjacent the recording and reading surface of the disk). Then, on a subsequent access to the record member, data can be recorded by selectively thermomagnetically switching portions of the record member such that the north pole terminates at the recording and readout surface of the disk. The magnetic steering field is reversed during erasure.

An unfortunate characteristic of many MO record members is that of defects in the medium forming the record member. Many of the defects can occur or be generated when the record member is first manufactured. Depending upon record member construction, additional defects can arise after the manufacture and even after data or other information-bearing signals are recorded on to the record member. Further, the size of the initial defects resulting from the manufacturing process may change. As a result, powerful error detection and error correction code (ECC) systems are employed with the MO record member for accommodating such medium defects. It is to be appreciated that the other medium types are also subject to high defect rates. The effective defect rates in MO record members are often higher than in record members using other magnetic recording media because of the increased density (smaller size signal recording areas) compared with that commonly employed with magnetic recorders. Many magnetisable media are manufactured using expensive, high quality manufacturing processes. It is desired to avoid such additional expense in the optical recording area, yet provide for a high level of data integrity during recording and readback (readout) operations using optical media. Such integrities include checking the medium for new or old defects, and checking for residual data, i.e., whether or not the record area has been fully erased for faithful MO recording and readback. Such checks also test the operativeness of the data signal channel electronics.

US-A-4,494,226 (EP-A-0 077 642) shows an optical recorder of the ablative type employing a so-called three-beam head. One of the beams leads the record sensing (readout) and recording beams for detecting medium defects. While a three-beam head certainly provides a faithful medium integrity checking system, it is desired to avoid the constructional expense and complexity of providing a three-beam head in an optical recorder. Yet, it is desired to provide for medium checking during recording in an optical recorder.

US-A-4,570,251 shows another ablative optical recorder. This patent specification describes sensing the reflected light from the laser beam when not recording pits, i.e., between ablating a record medium for recording binary "ones" on the disk. According to this patent specification, such sensing between ablatively recording pits detects the presence of prior ablated areas as reduced light reflection. Upon detecting an ablated area, recording is aborted. It is parenthetically pointed out that a greatly reduced reflected light intensity may also indicate a medium defect. The patent specification apparently illustrates a desire to provide for residual data checking in those systems wherein second medium light intensity modulates a readout beam to recover recorded information-bearing signals from a record medium.

US-A-4,648,085 shows reading out ablatively recorded information during recording for verifying successful recording. Again, intensity modulation of the readout beam by the record member is the basis for sensing a successful recording operation. In this arrangement the accuracy of the recorded information is determined by sensing changes in the polarity of the intensity signal.

The object of the present invention is to provide an improved optical data recording and readout apparatus.

The present invention relates to an optical data recording and readout apparatus comprising laser means for supplying a modulated light beam for recording information-bearing signals onto a record member, the record member being capable of recording the information-bearing signals as optically-sensible parameter changes of the record member, optical means optically interposed between the laser means and the record member for directing reflected light from the record member away from the laser means to a first detector including means responsive to intensity changes of light reflected from the record member to supply signals indicative of any such intensity changes, means for receiving signals indicative of the information-bearing signals to be recorded, recording circuit means coupled to the information bearing signal receiving means and to the laser means for responding to the received signals to actuate the laser means to modulate the intensity of its emitted light beam directed to the record member via the optical means, and readout circuit means coupled to the optical means for receiving reflected light from the record medium and for converting signals represented in the reflected light into a predetermined data format.

According to the invention, the optical apparatus is characterised in that it further comprises a second detector adapted to receive light from the optical means, pulse shaping means, means for supplying to the pulse shaping means signals from the second detector and signals from the recording circuit means corresponding to signals used in recording information on the record member whereby the pulse shaping means generates corresponding intensity modulated indicating signals, means for transferring the intensity-modulated indicating signals to the readout circuit means which converts the intensity modulated reflected signals into a predetermined data format, and data comparison means connected to the information bearing signal receiving means and to the readout circuit means for comparing the converted signals with the received signals and for generating a predetermined error indication when the comparison indicates a predetermined difference between the converted and the received signals.

In order that the invention may be more readily understood, an embodiment will now be described with reference to the accompanying drawings, in which:-
Fig. 1 is a simplified block diagram of an optical data recording and readout apparatus embodying the present invention,
Fig. 2 is a pulse shaper utilised in the apparatus illustrated in Fig. 1,
Fig. 3 is a set of idealised electrical signal waveforms used to describe the apparatus illustrated in Fig. 1,
Fig. 4 is a residual data detector utilised in the apparatus illustrated in Fig. 1,
Fig. 5 is a set of idealised and simplified signal waveforms usable for explaining the operation of the residual data detector illustrated in Fig. 4, and
Fig. 6 is an abbreviated block diagram showing an alternative embodiment of the invention.

Referring in general to the drawings, like numerals indicate like parts and structural features in the various Figures.

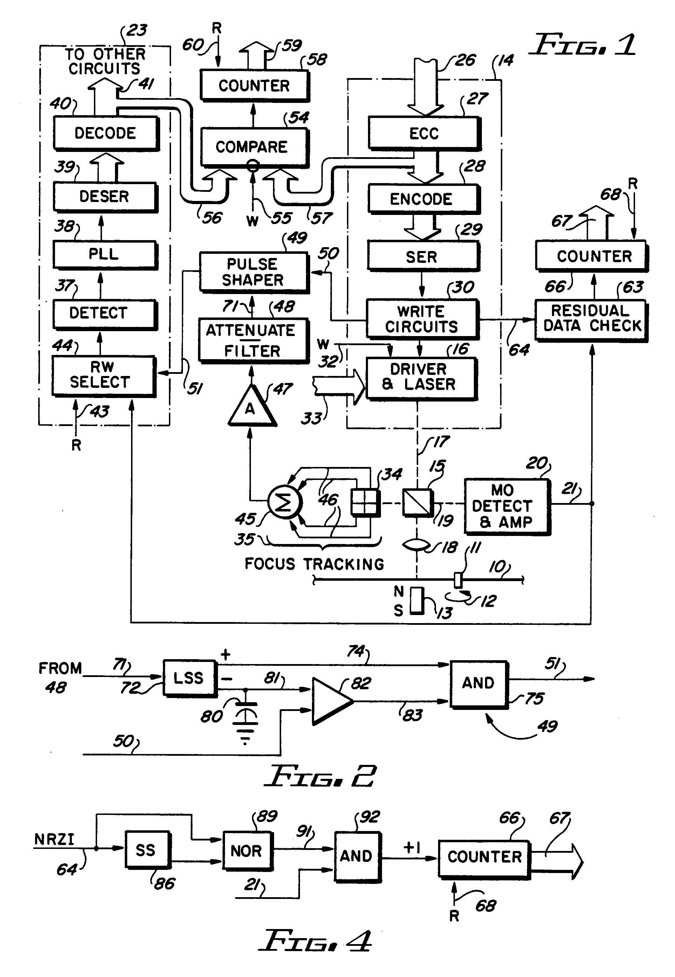

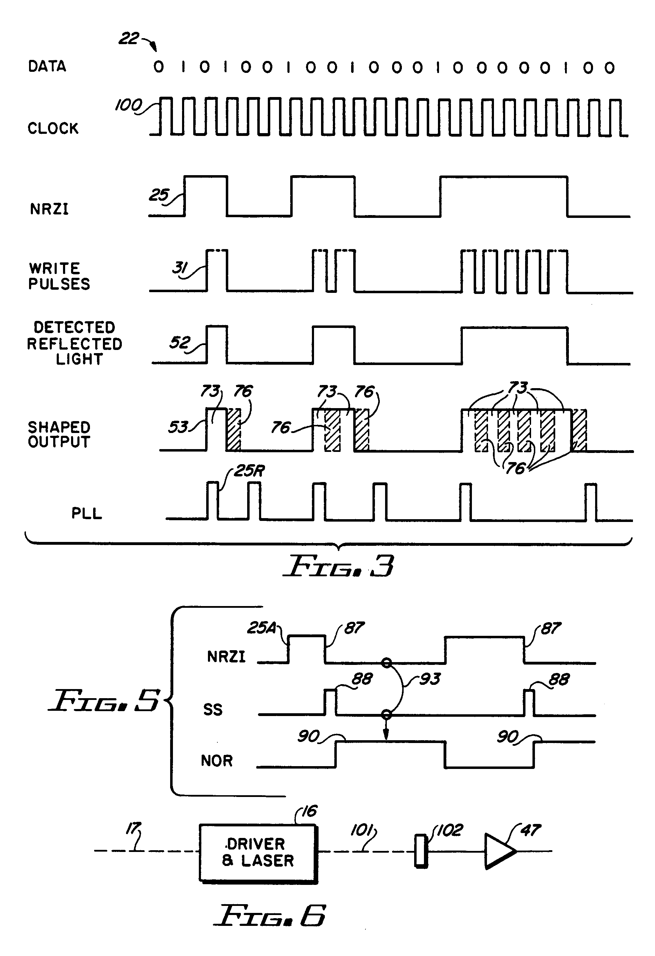

Referring now more particularly to Figs. 1 and 3, a magneto-optic (MO) optical record member in the shape of a disk 10 rotating about an axis on a drive spindle 11 is employed for recording information and yielding up by readout information based upon parameters that do not alter the intensity of the reflected light of a sensing laser light beam. The so-called and well-known Kerr effect, which rotates the linear polarisation of an incident light beam, effects readout and recovery of the recorded information. In the case of MO disk 10, the magnetic property of the medium of the disk which yields up information without altering the intensity of the reflected readout laser light beam is an optically sensible recording parameter.

Disk 10 is rotated in the direction of the arrow 12 by a motor (not shown) attached to drive spindle 11. Magnetic means 13 provides a magnetic steering field for determining the direction of remanant magnetisation during the recording process. It is preferred that an electromagnet provide a magnetic steering field which substantially floods the recording area of the record member. The location of the recording laser light beam determines which minute portion of the recording area of the record member will have its remanant magnetisation reversed, from the erasure or south direction of magnetisation to the north direction of magnetisation representing a binary "one". Similarly, during erasure, the magnetic steering field is reversed and an erasure light beam continuously impinges on the portion of the recording area of disk 10 to be erased.

For simplicity, an entire optical data recording apparatus is not shown. The portions of such an apparatus directly applicable to the actual recording and readout of information-bearing signals are shown and described for understanding the operation of the present invention. It is to be understood that format controls, clocking and the other operations required in such a recording and readout apparatus must be added to the arrangement illustrated in Fig. 1 in order to complete a practical MO recording and readout apparatus.

Write (or recording) circuitry 14 receives information-bearing signals from a connected data processor, communication line, keyboard, etc. (none shown) in a so-called "system form" such as represented in ASCII or EBCDIC coding. Circuitry 14 converts the received information-bearing signals into an intensity modulated light beam transferred by an MO optical device 15 onto disk 10. A laser and laser driver 16 supplies the light beam over a path 17 through the optical device 15 and thence through an objective lens 15 (it may also provide focusing and tracking operations, as is known) to the recording surface of disk 10. The light reflected from the surface of disk 10 during readout travels back through objective lens 18, then into optical device 15. The reflected light is directed for detection of data over a light path 19 to an MO detector and amplifier 20. The construction of detector and amplifier 20 follows the known techniques of prior art MO readout apparatus. The detected output signal then travels over a line 21 to readout circuitry 23. Readout circuitry 23 detects the supplied signals and convert the supplied signals from the recorded format to a system format for use by a connected data processor, or the like. The reflected light is also directed to a so-called quad detector 34. Detector 34 contains four photodetectors represented by the four small squares connected to focus and tracking circuits (not shown) as represented by bracket 35 for providing the usual focusing and tracking operations associated with an optical recording disk.

Recording circuitry 14 receives data signals 22 (see Fig. 3) over a bus 26 from the associated circuits (not shown) used for connecting the illustrated circuits of the recording apparatus to a using apparatus, such as a data processor. An ECC circuit 27 adds error detection and correction redundancy of a known type for enabling faithful recording and reproduction of the received data 22. Then, an encode circuit 28 receives the composite received data and ECC redundancy in a so-called system form and encodes this into a data recording form. Such data recording forms are well known and include RLL (run length limited) code such as 1,7 and 2,7 d,k recording codes. A serializer SER 29 serializes the data into the well known NRZI format represented by the signal 25 of Fig. 3. Write circuits 30 provide for modulation of the received NRZI signal 25 into write or record pulses 31 which are supplied to the driver and laser 16 in a known manner. Write pulses 31 enable the laser to emit light pulses through optics 15 to disk 10 during those periods in which the magnetic remanants of the MO layer (not shown) of disk 10 are to be reversed.

A relatively high intensity light beam, modulated according to the write pulses 31, is emitted by the laser to the disk 10. In the intervening periods between the write pulses 31, the emitted light beam intensity can be that of a readout laser light beam, no limitation thereto intended. Write enable line W 32 enables the driver and laser 16 to respond to the output signals of write circuit 30 for generating the intensity modulated write (record) light beam. Write enable line 32 carries control signals signifying recording (write) operations received from a usual recorder control (not shown). Bus 33 represents the inputs to the driver and laser 16, to accommodate radial changes on the disk, i.e. light intensity changes to accommodate different relative linear speeds of the recording area of the disk 10 with respect to the light beam, all as is well known. During a readout operation, (in the absence of a write enable signal on line W 32) the output light intensity from driver and laser 16 is at the readout level. During erase operations, a control signal (not shown) received over bus 33 causes the driver and laser 16, in a timed relationship to the illustrated clock signal 100 of Fig. 3, to provide continuous light (or a series of pulses) for erasing a track on the disk with the magnetic steering field being oriented in the erasure direction.

During readout of the magnetically-recorded, optically-sensible MO signals, readout circuitry 23 receives the signals from MO detector 20 in a known manner. In circuitry 23, signal detector 37 converts the received signal into a detected pulse form. The detected pulses are replicas of write pulses 31. The detected pulses are then supplied to phase lock loop PLL 38, for generating a readout clock signal for converting the detected pulses into NRZI form, such as is shown by numeral 25. DESER 39 deserializes the signals and supplies them to decode circuit 40. Decode circuit 40 converts the signals from recording format (like 1,7 or 2,7 RLL coding) to the system format for transmission over bus 41 to other circuits of the recording apparatus (not shown). Such other circuits may include ECC for correcting detected errors. The above description of Figs. 1 and 3 describes typical recording and readout circuits and circuit timing for use in an MO recorder.

Next, medium surface evaluation during a recording operation is described with continued attention to Figs. 1 and 3. During recording, readout circuitry 23 is disconnected from MO detector amplifier 20 and reconnected to receive later described processed output signals of quad detector 34. The output signals from readout circuitry 23 when receiving signals from quad detector 34 are redirected from other circuits to compare circuit 54. Compare circuit 54 receives from ECC 27 the input signals to be recorded for comparison with the output signals from the readout circuitry. Any miscompares are sent out as error signals to counter 58 as later described. The count in counter 58 indicates the number of detected defects in the area currently being recorded. It is preferred that the area be limited to one addressable section, such as circumferentially extending sectors, CKD (count, key, data) record areas and the like.

To switch readout circuitry 23 away from the output from MO detector and amplifier 20 on line 21, RW select circuit 44 is electrically interposed between line 21 and detect circuit 37. In the normal readout mode, a signal received over line 43 actuates RW select circuit 44 to electronically transfer the signals from line 21 to detect circuit 37. When record medium surface checking is to occur instead of normal readout, a signal on line 43 actuates RW select circuit 44 to disconnect line 21 from detect circuit 37 and connect to detect circuit 37 the processed signal output of quad detector 34 as received over line 51. RW select circuit 44, of known design, is an electronic switch having two inputs and a single output. Alternatively, quad detector 34 could be replaced by a detector dedicated to the checking function of the apparatus being described.

Quad detector 34 receives through objective lens 18 the intensity modulated reflected light which is precisely indicative of the light intensity of the beam 17 as reflected by the surface of disk 10. Any undesired asperities in the recording surface of disk 10 result in diminished light intensity of the reflected beam reaching quad detector 34. In the areas of the disk 10 having a satisfactory recording medium surface, the intensity modulation of the light reflected by disk 10 accurately reflects the write pulses 31 of Fig. 3. Summing the output signals of the four elements of quad detector 34 in sum circuit 45 provides a precise indication signal 52 of the write pulses 31 (see Fig. 3). Pulses 52 have to be phase adjusted (for circuit delays) as later explained, and smoothed to become more rectangular and therefore to indicate more reliably the modulated light beam reflected from disk 10. Electrical lines 46 respectively connect the four photodetectors of quad detector 34 to sum circuit 45.

Amplifier 47 receives the summed output signal 52 from sum circuit 45 and supplies this signal to attenuate and filter circuit 48. Attenuate and filter circuit 48 is designed, using known circuit design techniques, for adjusting the amplitude and the shape of the readout signals from quad detector 34 for use in pulse shaper 49. Pulse shaper 49 combines the replicas of write pulses 31 received over line 50 from circuits 30 to shape the quad detector output pulses 52 into readout circuitry 23 input signals 53 on line 51. Input signals 53 are detected by detect circuit 37 and applied to PLL 38 to produce output pulses 25R, which represent a series of pulses time coincident with the signal transitions of NRZI signal 25, the original write signal. Therefore, a faithful reproduction of the NRZI signal 25 is provided by the described circuits during the write (recording) mode, provided no surface asperities or defects occur on the medium of disk 10. The absence of any of the pulses 25R indicates a medium defect which will be detected as a medium error indication by compare circuit 54.

Decode circuit 40 and deserialiser 39 respond to the pulses 25R from PLL 38 in the same manner as they would for signals from MO detector and amplifier 20. Decode circuit 40 supplies the decoded signals over bus 56 to compare circuit 54. Compare circuit 54 is enabled by a write or recording indicating signal received from a recording control (not shown) over line 55, for comparing the pulses 25R with the input write data signals received over bus 57 from ECC 27. As long as compare circuit 54 detects identity between the signals on buses 56 and 57, no medium defects are being detected. Whenever a miscompare occurs between such signals, compare circuit 54 supplies an error indicating signal incrementing counter 58. Counter 58 is initially reset by the signal received over line 60 at the onset of recording on each addressable data recording area on the record medium of disk 10.

Upon completion of the recording operation, circuits (not shown) sense the count value in counter 58 as carried on bus 59 for capturing the defect count for the current addressable data recording area being recorded. Evaluation of the medium may then ensue and is beyond the scope of the present description. A large count in counter 58 may result in marking the just-evaluated addressable data recording area as being unavailable for recording data signals. It is noted that the signals processed by elements 45 to 49 represent a measure of the reflectivity of disk 10, in that changes in reflectivity will further modulate the modulated write laser light beam being reflected. Since the recording parameters are not optically sensible by intensity modulation, such signal processing is not a readout of signals actually stored on disk 10 during the current recording process.

In addition to monitoring the quality of the medium of disk 10 and detecting medium asperities, the apparatus illustrated provides for checking for residual data in the area in which data is being recorded, which data may not have been erased by a prior erasure operation (not described nor shown, but well known). Residual data check circuit 63 (later described) receives a replica signal of the NRZI signal 25 from write circuits 30 during the recording operation. Residual data check circuit 63 simultaneously receives the signals on line 21 as detected by MO detector and amplifier 20 which are BETWEEN SUCCESSIVE ONES OF THE WRITING OR RECORDING LIGHT PULSES FROM LASER 16. That is, in between the periods of recording actual magnetic reversals on disk 10, circuit 63 optically senses any existing recorded parameters in the recording area. Such sensible parameters should always indicate an erasure direction of all binary zeros. Residual data check circuit 63 supplies an output pulse each time a non-erasure condition is detected during periods between recording signals. Circuit 63 increments counter 66 once for each detected non-erasure.

The NRZI replica signal on line 64 times the operation of residual data check circuit 63 for performing the residual data checking operation. Counter 66 is initially reset by a signal received over line 68 at the onset of each recording operation in an addressable or otherwise identifiable data recording area of disk 10, such as described for the operation of counter 58. The count value is supplied over bus 67 to be sensed at the termination of the recording operation for further processing beyond the scope of the present description. Such evaluation may show that, because of the detected residual data, the recording in the current recording area is inaccurate (no data integrity); therefore, data recovery and re-recording should ensue.

The operation of pulse shaper 49 of Fig. 1 is now described with reference to Figs. 2 and 3. The intensity modulated indicating signal from sum circuit 45 is received by pulse shaper 49 over line 71 as an input signal to a linear single shot circuit 72 (hereafter LSS). LSS 72 outputs a squared signal over line 74 which has a duration greater than one clock cycle, i.e. greater than the minimum duration of write pulses 31. LSS 72 is triggered each time a peak of quad-detector output pulses 52 is received over line 71. Write compensation control signals supplied over line 50 from write circuits 30 are used in AND circuit 75 to gate the output signal of line 74 to line 51 during the duration of plus (+) detected reflected light pulses 52. Comparator 82 combines the line 81 signal (which is stored in capacitor 80 to introduce a delay) with the line 50 signal to supply an enabling signal over line 83 to AND circuit 75. Enabling AND circuit 75 is effective to lengthen the signal on line 74 to pass the shaped output signals 53 to line 51. This delay compensates for circuit delays found in write circuits 30, driver 16, sum circuit 45 and circuits 47 and 48. Such delays are determined by measurement, beam shape, power levels and electrical circuit characteristics. This delay compensation provides good coincidence between the output of readout circuiry 23 and the input signal received by compare circuit 54 over bus 57. The unhatched portions 73 of the shaped output signals 53 indicate the minimum pulse width of pulses 53. Hatched portions 76 indicate the maximum pulse durations of each actuation of LSS 72 to the output through AND circuit 75.

Operation of residual data check circuit 63 is now described with reference to Figs. 4 and 5. Single shot circuit SS 86 receives the NRZI replica signal 25A over line 64 from write circuits 30. SS 86 outputs a narrow pulse signal 88 at each negative transition 87 of NRZI replica signal 25A. NOR circuit 89 receives both signals 25A and 88 to produce a residual data check enabling signal 90 on line 91 for enabling residual data checking and counting. Signal 88 provides for a small delay in the sensing and checking of residual data and compensates for signal processing delays and light beam spot size characteristics. The NRZI replica signal 25A corresponds to those periods of time when driver and laser 16 is supplying a high intensity signal recording light beam to disk 10 and, hence, there should not be any residual data checking at this time. Tieline 93 represents the logic of operation of NOR circuit 89. AND circuit 92 receives a recording indicating signal over line 91 for passing the line 21 readout signals to counter 66.

Fig. 6 illustrates an alternative embodiment of the invention. The laser element (not separately shown) of laser and driver 16 is of the gallium-arsenide type which includes a waste light port emitting a light beam along a light path 101. This corresponds to the light emitted by the laser along path 17 (Fig. 1). When the frequency of operation of the recording apparatus exceeds the band pass of quad detector 34, then a high frequency detector (not shown) can be substituted for the quad detector. Such a high frequency detector is directly connected to the input of amplifier 47. In this alternative embodiment, the sum circuit 45 is not connected to amplifier 47. Currently, the high frequency detectors may not be sufficiently sensitive to reliably provide photo currents for analysis. In such an instance, the Fig. 6 embodiment may be employed for reduced checking of the recording apparatus operation.

A high frequency responsive photodetector 102 intercepts the light travelling along path 101. Photodetector 102 supplies its electric output current directly to the input of amplifier 47. The Fig. 1 illustrated circuits otherwise operate as described. This alternative arrangement checks the electrical circuit operation of the illustrated data channels of Fig. 1 but does not check the medium of the disk 10 nor the optical devices 15, 18.

## Claims

1. An optical data recording and reading apparatus comprising
laser means (16) for supplying a modulated light beam (17) for recording information-bearing signals onto a record member (10), said record member being capable of recording said information-bearing signals as optically-sensible parameter changes of the record member,
optical means (15) optically interposed between said laser means and said record member for directing reflected light from said record member away from said laser means to a first detector (20) including means responsive to intensity changes of light reflected from said record member to supply signals indicative of any such intensity changes,
means (14) for receiving signals indicative of the information-bearing signals to be recorded,
recording circuit means (30) coupled to said information bearing signal receiving means (14) and to said laser means (16) for responding to the received signals to actuate the laser means to modulate the intensity of its emitted light beam directed to the record member via said optical means, and
readout circuit means (23) coupled to said optical means (15) for receiving reflected light from said record medium and for converting signals represented in said reflected light into a predetermined data format,
characterised in that said apparatus also comprises
a second detector (35) adapted to receive light from said optical means (15),
pulse shaping means (49),
means (71, 50) for supplying to said pulse shaping means signals from said second detector and signals from said recording circuit means (30) corresponding to signals used in recording information on said record member whereby said pulse shaping means generates corresponding intensity modulated indicating signals,
means (51) for transferring said intensity-modulated indicating signals to said readout circuit means (23) which converts said intensity-modulated reflected signals into a predetermined data format, and
data comparison means (54) connected to said information bearing signal receiving means (14) and to said readout circuit means (23) for comparing the converted signals with the received signals and for generating a predetermined error indication when the comparison indicates a predetermined difference between the converted and the received signals.

2. Apparatus as claimed in claim 1 characterised in that said second detector (35) comprises
means (34) for receiving a portion of said light reflected from said record member and being responsive to the received light to detect changes in said optically-sensible parameters of said record member and to generate signals indicative of said detected changes,
switch means (45,47,48) electrically interposed between said light receiving means (34) and said pulse shaping means (49), and
control means in said data comparison means (54) responsive to a write command to enable said comparison.

3. Apparatus as claimed in claim 1 or claim 2 comprising a first counter (58) connected to said data comparison means (54) for counting its generated indicating signals.

4. Apparatus as claimed in any one of the preceding claims comprising residual data check means (63) connected to said first detector (20) and connected to said recording circuit means (14) for responding to said first detector indicating detected changes in said optically-sensible parameter to generate a residual data signal indicating that data has not been completely erased from said record member (10).

5. Apparatus as claimed in claim 4 comprising a second counter (66) connected to said residual data check means (63) for counting its generated indicating signals.

## Patentansprüche

1. Ein optisches Datenaufzeichnungs- und -wiedergabegerät, das folgendes umfaßt:
ein Lasermittel (16) zur Aussendung eines modulierten Lichtstrahls (17) zur Aufzeichnung informationstragender Signale auf einem Aufzeichnungselement (10), wobei das genannte Aufzeichnungselement in der Lage ist, die genannten informationstragenden Signale als optisch sensible Parameterveränderungen des Aufzeichnungselements aufzuzeichnen,
ein optisches Mittel (15), das optisch zwischen dem genannten Lasermittel und dem genannten Aufzeichnungsmittel zwischengeschaltet ist, um das vom genannten Aufzeichnungselement reflektierte Licht vom genannten Lasermittel weg zu einem ersten Detektor (20) zu lenken, der ein Mittel enthält, das auf Intensitätsveränderungen des von dem genannten Aufzeichnungsmittel reflektierten Lichts anspricht, um Signale zu senden, die eine solche Intensitätsveränderung anzeigen,
ein Mittel (14) für den Empfang von Signalen, das die aufzuzeichnenden informationstragenden Signale anzeigt,
ein Aufzeichnungsschaltungsmittel (30), das an das genannte informationstragende Signalempfangsmittel (14) und an das genannte Lasermittel (16) gekoppelt ist, und das auf die empfangenen Signale reagiert, um zu bewirken, daß das Lasermittel die Intensität des von ihm emittierten Lichtstrahls, der durch das genannte optische Mittel auf das Aufzeichnungselement gerichtet ist, moduliert, und
ein Auslese-Schaltungsmittel (23), das mit dem genannten optischen Mittel (15) gekoppelt ist, um von dem genannten Aufzeichnungsmedium reflektiertes Licht zu empfangen und um Signale, die durch dieses reflektierte Licht dargestellt werden, in ein vorbestimmtes Datenformat umzuwandeln,
dadurch gekennzeichnet, daß das genannte Gerät desweiteren folgendes umfaßt:
einen zweiten Detektor (35), der Licht von dem genannten optischen Mittel (15) empfangen kann,
ein Impuls-Formmittel (49),
Mittel (71, 50), die dem genannten Impuls-Formmittel Signale von dem genannten zweiten Detektor und Signale von dem genannten Aufzeichnungs-Schaltungsmittel (30) senden, welche Signalen entsprechen, die zur Aufzeichnung von Informationen auf dem genannten Aufzeichnungselement verwendet werden, wodurch das genannte Impulsform-Mittel entsprechende intensitätsmodulierte Anzeigesignale erzeugt,
ein Mittel (51) zur Übertragung der genannten intensitätsmodulierten Anzeigesignale zu dem genannten Auslese-Schaltungsmittel (23), welches die genannten intensitätsmodulierten reflektierten Signale in ein vorbestimmtes Datenformat umwandelt, und
ein Datenvergleichsmittel (54), das an das genannte Mittel für den Empfang informationstragender Signale (14) und an das genannte Auslese-Schaltungsmittel (23) angeschlossen ist, zum Vergleichen der umgewandelten Signale mit den empfangenen Signalen und zum Erzeugen einer vorbestimmten Fehleranzeige, wenn der Vergleich eine vorbestimmte Differenz zwischen den umgewandelten und den empfangenen Signalen ergibt.

2. Gerät nach Anspruch 1, dadurch gekennzeichnet, daß der genannte zweite Detektor (35) folgendes umfaßt:
ein Mittel (34) zum Empfangen eines Teils des genannten, von dem genannten Aufzeichnungselement reflektierten Lichts, das auf das empfangene Licht anspricht und Veränderungen in den genannten optisch sensiblen Parametern des genannten Aufzeichnungselementes erkennt, und Signale erzeugt, welche die genannten erkannten Veränderungen anzeigen,
Schaltmittel (45, 47, 48), die elektrisch zwischen dem genannten, Licht empfangenden Mittel (34) und dem genannten Impulsform-Mittel (49) zwischengeschaltet sind, und
ein Steuermittel in dem genannten Datenvergleichsmittel (54), welches auf einen Schreibbefehl anspricht, um den genannten Vergleich zu ermöglichen.

3. Gerät nach Anspruch 1 oder 2, welches ein erstes Zählwerk (58) umfaßt, das an das genannte Datenvergleichsmittel (54) angeschlossen ist, um die von ihm erzeugten Anzeigesignale zu zählen.

4. Gerät nach jedem der vorhergehenden Ansprüche, welches ein Restdaten-Prüfmittel (63) umfaßt, welches an den genannten ersten Detektor (20) und das genannte Aufzeichnungs-Schaltmittel (14) angeschlossen ist, und darauf reagiert, wenn von dem genannten ersten Detektor angezeigt wird, daß in dem genannten optisch sensiblen Parameter Veränderungen stattgefunden haben, um ein Restdatensignal zu erzeugen, welches anzeigt, daß die Daten von dem genannten Aufzeichnungselement (10) nicht vollständig gelöscht wurden.

5. Gerät nach Anspruch 4, welches ein zweites Zählwerk (66) umfaßt, das an das genannte Restdaten-Prüfmittel (63) angeschlossen ist, um die von ihm erzeugten Anzeigesignale zu zählen.

## Revendications

1. Un appareil d'enregistrement et de lecture optiques de données, comprenant
- des moyens à laser (16) pour générer un faisceau lumineux modulé (17) pour enregistrer des signaux portant des informations sur un élément d'enregistrement (10), ledit élément d'enregistrement étant capable d'enregistrer lesdits signaux portant des informations sous la forme de modifications de paramètres optico-sensibles de l'élément d'enregistrement,
- des moyens optiques (15) optiquement interposés entre lesdits moyens à laser et ledit élément d'enregistrement pour diriger la lumière réfléchie par ledit élément d'enregistrement, vers un premier détecteur (20) comprenant des moyens sensibles aux modifications de l'intensité de la lumière réfléchie par ledit élément d'enregistrement afin de délivrer des signaux indiquant toute modification de l'intensité,
- des moyens (14) pour recevoir des signaux indiquant les signaux portant des informations, à enregistrer,
- des moyens à circuits d'enregistrement (30) raccordés auxdits moyens de réception desdits signaux portant des informations (14) et auxdits moyens à laser (16) pour répondre aux signaux reçus afin d'activer les moyens à laser pour moduler l'intensité de leur faisceau lumineux émis dirigé vers l'élément d'enregistrement par l'intermédiaire desdits moyens optiques, et
- des moyens à circuits de lecture (23) raccordés auxdits moyens optiques (15) pour recevoir la lumière réfléchie dudit milieu d'enregistrement et pour convertir des signaux représentés dans ladite lumière réfléchie dans un format de données prédéterminé,
caractérisé en ce que ledit appareil comprend en outre:
- un second détecteur (35) adapté pour recevoir de la lumière desdits moyens optiques (15),
- des moyens de configuration d'impulsions (49),
- des moyens (71, 50) pour délivrer auxdits moyens de configuration d'impulsions, des signaux issus dudit second détecteur et des signaux issus desdits moyens à circuits d'enregistrement (30), correspondant à des signaux utilisés pour enregistrer des informations sur ledit élément d'enregistrement, ce qui fait que lesdits moyens de configuration d'impulsions génèrent des signaux indicateurs d'intensité modulée correspondants,
- des moyens (51) pour transférer lesdits signaux indicateurs d'intensité modulée auxdits moyens a circuits de lecture (23) qui convertissent lesdits signaux réfléchis d'intensité modulée en un format de données prédéterminé, et
- des moyens de comparaison de données (54) connectés auxdits moyens de réception de signaux portant des informations (14) et auxdits moyens à circuits de lecture (23), pour comparer les signaux convertis et les signaux reçus et pour générer une indication d'erreur prédéterminée lorsque la comparaison indique une différence prédéterminée entre les signaux convertis et reçus.

2. Appareil tel que revendiqué par la revendication 1, caractérisé en ce que ledit second détecteur (35) comprend:
- des moyens (34) pour recevoir une partie de ladite lumière réfléchie par ledit élément d'enregistrement et répondant à la lumière reçue pour détecter des modifications dans lesdits paramètres optiquement sensibles dudit élément d'enregistrement et pour générer des signaux indiquant lesdites modifications détectées,
- des moyens de commutation (45, 47, 48) électriquement interposés entre lesdits moyens de réception de lumière (34) et lesdits moyens de configuration d'impulsions (49), et
- des moyens de commande dans lesdits moyens de comparaison de données (54) répondant à un signal de commande d'écriture pour conditionner ladite comparaison.

3. Appareil tel que revendiqué par la revendication 1 ou 2, comprenant un premier compteur (58) connecté auxdits moyens de comparaison de données (54) pour compter ses signaux indicateurs générés.

4. Appareil tel que revendiqué par l'une quelconque des revendications précédentes, comprenant des moyens de vérification de données résiduelles (63) connectés audit premier détecteur (20) et connectés auxdits moyens à circuits d'enregistrement (14) pour répondre audit premier détecteur indiquant des modifications détectées dans ledit paramètre optico-sensible afin de générer un signal de données résiduelles indiquant que des données n'ont pas été complètement effacées dudit élément d'enregistrement (10).

5. Appareil tel que revendiqué par la revendication 4, comprenant un second compteur (66) connecté auxdits moyens de vérification de données résiduelles (63) pour compter ses signaux indicateurs générés.
